# EUROPÄISCHE PATENTSCHRIFT

(11) **EP 1 380 088 B1**
(45) Veröffentlichungstag und Bekanntmachung des Hinweises auf die Patenterteilung: **23.01.2008**
(21) Anmeldenummer: 02747286.9
(22) Anmeldetag: 19.04.2002
(51) Int. Cl.: H02K 1/14, H02K 15/02

(54) **STATOR FÜR EINE ELEKTRISCHE DREHFELDMASCHINE, INSBESONDERE SYNCHRONMASCHINE**
STATOR FOR AN ELECTRICAL INDUCTION MACHINE, ESPECIALLY A SYNCHRONOUS MACHINE
STATOR POUR MACHINE ELECTRIQUE A INDUCTION, NOTAMMENT MACHINE SYNCHRONE

(30) Priorität: 20.04.2001 DE 10119642
(43) Veröffentlichungstag der Anmeldung: 14.01.2004
(73) Patentinhaber: Lenze Drive Systems GmbH, 31855 Aerzen (DE)
(72) Erfinder: FRÄGER, Carsten, 31785 Hameln (DE); HILFERT, Sven, 31855 Aerzen (DE); MÜLLER, Matthias, 32683 Barntrup (DE); NEUMANN, Edmund, 31789 Hameln (DE)
(74) Vertreter: Elbertzhagen, Otto
(86) Internationale Anmeldenummer: PCT/EP2002/004318
(87) Internationale Veröffentlichungsnummer: WO 2002/087056

(56) Entgegenhaltungen:
- EP-A- 0 849 857
- EP-A- 1 014 536
- EP-A- 1 020 975
- EP-A- 1 087 497
- DE-A- 19 846 489
- GB-A- 2 224 399
- US-A- 5 331 240

## Beschreibung

### Technisches Gebiet

Die Erfindung bezieht sich auf einen Stator für eine elektrische Drehfeldmaschine, insbesondere eine Synchronmaschine, mit einem zumindest ein ringförmiges Joch bildenden Blechpaket und einer daran innenseitig liegenden Wicklung, die aus einer Mehr- oder Vielzahl von in Umfangsrichtung verteilten Spulen gebildet ist.

### Stand der Technik

Bei Drehfeldmaschinen, insbesondere auch bei Synchronmaschinen, ist es üblich, die Wicklung in Nuten anzuordnen, die sich an der inneren Umfangsseite des Jochs befinden. Je nach Belegung der Nuten kreuzen die einzelnen Spulen der gesamten Wicklung im Stirnraum mehr oder weniger einander und berühren sich. Entsprechend kompliziert ist das Einbringen der Spulen der Wicklung in die Nuten, wonach dann an den Wickelköpfen eine Isolation der Spulen gegeneinander vorgesehen werden muß.

Bei Gleichstrommaschinen werden die Wicklungen auf ausgeprägten Polen angeordnet. Aus dem Dokument GB 2 224 399 A ist ein Stator für einen Gleichstrommotor bekannt, der segmentiert ist. Das Joch dieses Stators ist in einzelne Abschnitte gegliedert, die an beiden Enden mit je einem Hauptpol verbindbar sind. Dazu sind an den Jochabschnitten und an den Hauptpolen ineinandergreifende Formschlußelemente vorgesehen. Zwischen den Hauptpolen können an die Jochabschnitte Hilfspole mittels einer Schwalbenschwanzverbindung angesetzt werden. Über die Bewicklung der Pole ist in dem Dokument GB 2 224 399 A nichts ausgeführt.

Aus dem Dokument GB 2 179 205 A ist ein weiterer Stator für einen Gleichstrommotor bekannt, der innenseitig am Joch vorstehende Hauptpole und Zwischenpole aufweist. Damit die mit dem Statorjoch einstückigen Hauptpole bewickelt werden können, sind die Zwischenpole nachträglich an das Joch ansetzbar.

### Die Erfindung

Der Erfindung liegt die Aufgabe zugrunde, einen Stator für eine elektrische Drehfeldmaschine zu schaffen, der sich insgesamt insbesondere jedoch hinsichtlich seiner Wicklung einfacher herstellen läßt.

Diese Aufgabe wird bei einem Stator der gattungsbildenden Art nach der Erfindung durch die kennzeichnenden Merkmale des Patentanspruches 1 gelöst.

Dazu sind an dem geblechten Joch innenseitig ausgeprägte, in Radialrichtung nach innen hin vorstehende Pole und Zwischenpole einander in Umfangsrichtung abwechselnd angeordnet, von denen die Zwischenpole unbewickelt und die Pole jeweils von einer Spule umschlossen sind. Die bewickelten Pole haben an ihren achsparallelen Längsseiten je eine in Richtung der Längsseite sich erstreckende Nut zur Aufnahme von Spulenabschnitten, und diese Nuten weisen einen trapezförmigen Querschnitt auf und sind durch die unbewickelten Zwischenpole an der längsseitigen Nutöffnung geschlossen. Die Zwischenpole sind mit dem Joch einstückig und die Pole sind als separat bewickelte Blechpakete ausgebildet, die an ihren zum Joch hin liegenden Fügeseiten achsparallel sich erstreckende Formschlußglieder haben, denen achsparallel sich erstreckende Formschlußelemente im Abstand der Teilung der bewickelten Pole an der Innenseite des Jochs entsprechen.

Für die Erfindung ist wesentlich, daß sich die einzelnen Spulen einfacher wickeln lassen und insbesondere unmittelbar auf die zu bewickelnden Pole aufgewickelt werden können. Die unbewickelten Zwischenpole grenzen die Spulen auf den bewickelten Polen voneinander ab, und auch an den Wickelköpfen kommen die Spulen nicht miteinander in Berührung, denn im Stirnraum der Maschine zu beiden Seiten des Stators haben die Spulen keine Kreuzungen. Eine Isolation zwischen den Spulen fällt vollständig weg, und die einzelnen Spulen selbst lassen sich einfacher isolieren.

Vorteilhafte Ausgestaltungsmerkmale der Erfindung ergeben sich aus den Unteransprüchen.

### Kurzbeschreibung der Zeichnungsabbildungen

Die Erfindung wird nachfolgend anhand der Zeichnung an Ausführungsbeispielen noch näher erläutert. Dabei zeigen:
- Fig. 1: die Stirnansicht eines Stators für eine Synchronmaschine mit einem Teilschnitt im Bereich eines der bewickelten Pole,
- Fig. 2: einen Längsschnitt durch den Stator nach Fig. 1,
- Fig. 3: in vergrößerter Darstellung einen Teilquerschnitt durch den Stator nach Fig. 1 im Bereich eines der bewickelten Pole und
- Fig. 4: eine perspektivische Darstellung eines bewickelbaren Pols für einen Stator der in Rede stehenden Art mit schematisch angedeuteter Wicklung.

### Weg zur Ausführung der Erfindung

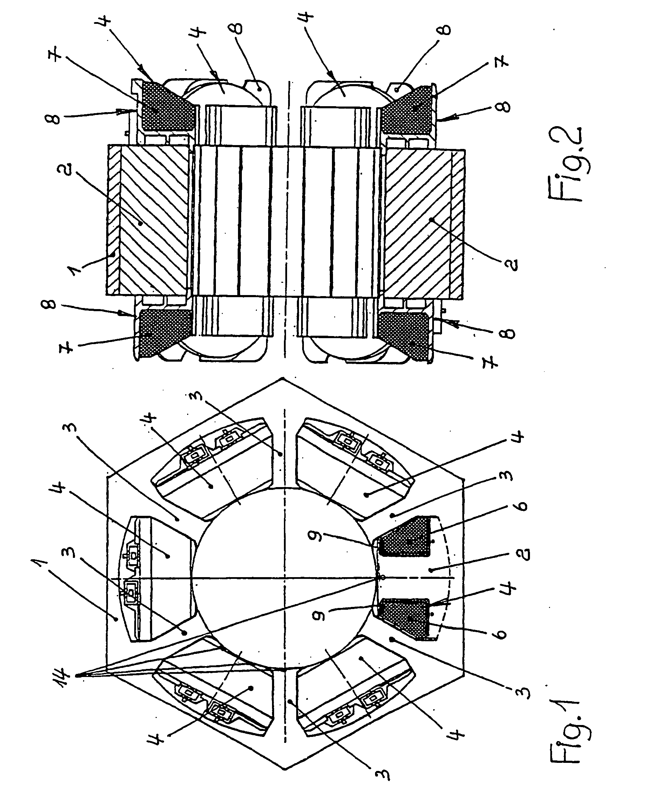

Im einzelnen erkennt man in den Figuren 1 und 2 das Blechpaket eines Stators für eine Synchronmaschine, mit dem ein ringförmiges Joch 1 gebildet ist, an dessen Innenseite radial nach innen hin vorstehend Pole 2 und Zwischenpole 3 angeordnet sind. Anders als bei sonstigen Drehfeldmaschinen, die im Stator ein geblechtes Eisenpaket haben, sind bei dem dargestellten Stator die Pole 2 und die Zwischenpole 3 ausgeprägte Pole.

Jeder der Pole 2 trägt eine Spule 4, die elektrisch so miteinander verschaltet sind, daß bei der Bestromung sich ein magnetisches Drehfeld ergibt, dem der nicht dargestellte Rotor nachfolgt.

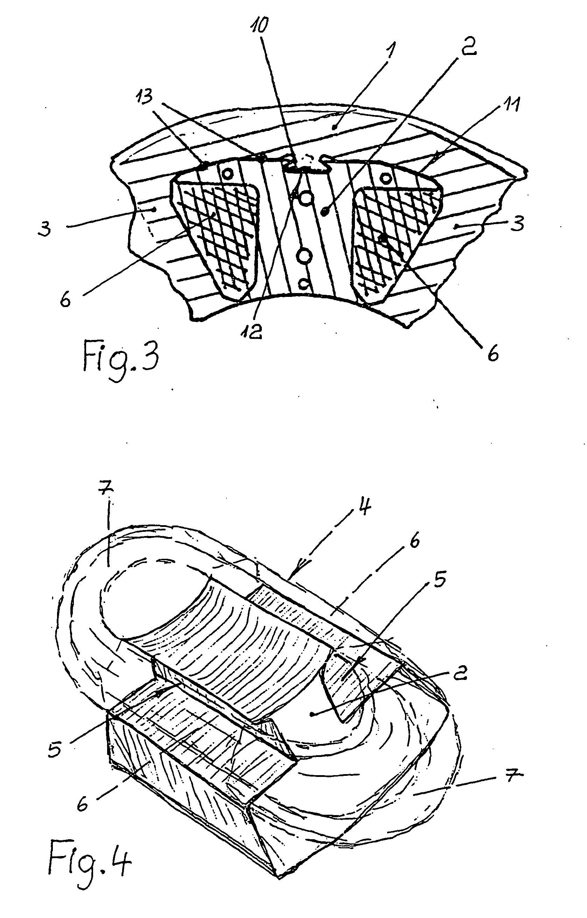

Zur Aufnahme der Spulen 4 haben die Pole 2 an ihren achsparallel liegenden Längsseiten Nuten 5, was aus Fig. 4 hervorgeht. Diese achsparallel liegenden Nuten 5 werden durch die jeweils beidseits der bewickelbaren Pole 2 liegenden Zwischenpole 3 geschlossen, so daß sich insgesamt zu beiden Seiten jedes bewickelbaren Pols 2 ein im Querschnitt etwa trapezförmiger Wickelraum ergibt, in dem jeweils die beiden längslaufenden Spulenabschnitte 6 einer Spule 4 aufgenommen sind. Die Nuten 5 der Pole 2 oder der gesamte Wickelraum einschließlich der Flanken der Zwischenpole 3 ist mittels eines Spulenkörpers 9 ausgekleidet, der entsprechend die Spulenabschnitte 6 umgibt.

Im Stirnraum der Maschine, also vor den beiden Stirnseiten des Stators, bilden die Spulen 4 etwa halbkreisförmig gebogene Kopfabschnitte 7, was in Fig. 4 angedeutet ist. Zur einfacheren Bewicklung der Pole 2 und Ausbildung der Kopfabschnitte 7 der Spulen 4 sind daran stirnseitig Spulenträger 8 angesetzt, die an die stirnseitigen Öffnungen der längsseitigen Nuten 5 der Pole 2 anschließen und darin eingesteckt sein können.

Weiter erkennt man in Fig. 1 noch an den zum Luftspalt hin liegenden Flächen der Pole 2 achsparallel verlaufende Nuten 14, die sowohl bei den Polen 2 als auch bei den unbewickelten Zwischenpolen 3 vorhanden sein können und der Symmetrierung der aus den einzelnen Spulen 4 gebildeten Wicklung dienen.

Die Bewicklung der Pole 2 erfolgt außerhalb des Stators, was die An- bzw. Aufbringung der Spulen 4 besonders vereinfacht. Die zunächst separaten Pole 2 werden nach der Bewicklung in achsparalleler Richtung in den Zwischenraum zwischen zwei Zwischenpolen 3 eingeschoben und mit an den Jochverlauf angepaßten Fügeseiten 11 mit kleinstmöglichem Luftspalt an das Joch 1 angefügt. Dazu weist das Joch 1 im Abstand der Teilung der bewickelten Pole 2 an seiner Innenseite achsparallel sich erstreckende Formschlußelemente 10 in Gestalt von Stegen mit schwalbenschwanzförmigem Querschnitt auf, denen Formschlußglieder 12 mit ebenfalls schwalbenschwanzförmigem Negativ-Querschnitt an den Fügeseiten 11 der Pole 2 entsprechen. Zusätzlich noch können längslaufende, achsparallele Konturen 13 an den Fügestellen vorgesehen sein, um eine exakte Positionierung der bewickelten Pole 2 sicherzustellen. Die Pole 2 stellen vor dem Bewickeln ein separat gefertigtes Blechpaket dar, das auch mittels anders gestalteter Formschlußelemente an das Joch 1 angefügt werden kann.

Die Anordnung der bewickelten Pole 2 am Joch 1 erfolgt derart, daß in Umfangsrichtung des Jochs 1 gesehen die Pole 2 und die Zwischenpole 3 miteinander abwechseln, also jeweils ein Zwischenpol 3 zwischen zwei Polen 2 und umgekehrt ein Pol 2 jeweils zwischen zwei Zwischenpolen 3 sich befindet.

## Patentansprüche

1. Stator für eine elektrische Drehfeldmaschine, insbesondere eine Synchronmaschine, mit einem Blechpaket, welches ein ringförmiges Joch (1) bildet und an dem innenseitig eine Wicklung liegt, die aus einer Mehr- oder Vielzahl von in Umfangsrichtung verteilten Spulen (4) gebildet ist, wobei
innenseitig am Joch (1) ausgeprägte, in Radialrichtung nach innen hin vorstehende Pole (2) und Zwischenpole (3) einander in Umfangsrichtung abwechselnd angeordnet sind, von denen die Zwischenpole (3) unbewickelt und die Pole (2) jeweils von einer Spule (4) umschlossen sind, wozu die Pole (2) an ihren achsparallelen Längsseiten je eine in Richtung der Längsseite sich erstreckende Nut (5) zur Aufnahme von Spulenabschnitten (6) haben und diese Nuten (5) einen trapezförmigen Querschnitt aufweisen **dadurch gekennzeichnet, daß** die unbewickelten Zwischenpole (3) an der längsseitigen Nutöffnung geschlossen sind, wobei die Zwischenpole (3) mit dem Joch (1) einstückig und die Pole (2) als separat bewickelte Blechpakete ausgebildet sind, die an ihren zum Joch (1) hin liegenden Fügeseiten (11) achsparallel sich erstreckende Formschlußglieder (12) haben, denen achsparallel sich erstreckende Formschlußelemente (10) im Abstand der Teilung der bewickelten Pole (2) an der Innenseite des Jochs (1) entsprechen.

2. Stator nach Anspruch 1,
**dadurch gekennzeichnet,**
**daß** an die stirnseitigen Öffnungen der Nuten (5) an den Polen (2) die Kopfabschnitte (7) der jeweiligen Spule (4) stützende Spulenträger (8) angesetzt sind.

3. Stator nach Anspruch 1 oder 2,
**dadurch gekennzeichnet,**
**daß** die Nuten (5) an den bewickelten Polen (2) mittels einem die aufgenommenen Spulenabschnitte (6) ummantelnden Spulenkörper (9) ausgekleidet sind.

4. Stator nach einem der Ansprüche 1 -3,
**dadurch gekennzeichnet,**
**daß** die Formschlußelemente (10) des Jochs (1) und die Formschlußglieder (12) der bewickelten Pole (2) im Querschnitt schwalbenschwanzförmig sind.

5. Stator nach einem der Ansprüche 1 - 4,
**dadurch gekennzeichnet,**
**daß** an der Luftspaltseite der Pole (2) und/oder der Zwischenpole (3) achsparallele Nuten (14) Symmetrierung der Wicklung vorhanden sind.

6. Verfahren zur Herstellung des Stators einer elektrischen Drehfeldmaschine, insbesondere einer Synchronmaschine, der ein ein ringförmiges Joch bildendes Blechpaket und eine daran innenseitig liegende Wicklung aufweist, die aus einer Mehr- oder Vielzahl von in Umfangsrichtung verteilten Spulen besteht,
**dadurch gekennzeichnet,**
**daß** am Joch (1) innenseitig radial vorstehende, einander in Umfangsrichtung abwechselnde Pole (2) und Zwischenpole (3) vorgesehen werden, von denen die Zwischenpole (3) mit dem Joch (1) als einstückiges Blechpaket und die Pole (2) als separates Blechpaket gefertigt werden, jeder Pol (2) mit einer Spule (4) umwickelt wird und die bewickelten Pole (2) zwischen den Zwischenpolen (3) innenseitig an das Joch (1) angefügt werden.

7. Verfahren nach Anspruch 6,
**dadurch gekennzeichnet,**
**daß** die bewickelten Pole (2) durch achsparalleles Einschieben in den Zwischenraum zwischen den Zwischenpolen (3) an das Joch (1) angefügt werden.

## Claims

1. Stator for an electrical induction machine, especially a synchronous machine, comprising a stack of laminations forming an annular yoke (1) on the inner side of which a winding lies which comprises a plurality or a multitude of coils (4) distributed in the circumferential direction, whereby poles (2) projecting radially inwards and intermediate poles (3) are arranged so as to alternate with each other in the circumferential direction on the inner side of the yoke (1), wherein the intermediate poles (3) are unwound and the poles (2) are each surrounded by a coil (4), for which purpose the poles (2) have on each of their longitudinal sides parallel to the stator axis a groove (5) extending along the longitudinal side for receiving coil sections (6) and these grooves (5) have a trapezoidal cross-section,
**characterised in that**
the unwound intermediate poles (3) are closed on the longitudinal side facing the groove opening, **in that** the intermediate poles (3) are formed integrally with the yoke (1) and the poles (2) are formed as separately wound stacks of laminations which have shape-locking members (12) which extend parallel to the axis on their joining sides (11) facing the yoke (1), to which shape-locking members (10) extending parallel to the axis at a distance from the division of the wound poles (2) on the inner side of the yoke (1) correspond.

2. Stator according to claim 1,
**characterised in that**
the head sections (7) of the respective coil supports (8) supporting each coil (4) are disposed on the end-face openings of the grooves (5) on the poles (2).

3. Stator arranged according to claim 1 or 2,
**characterised in that**
the grooves on the wound poles (2) are provided with a coil body (9) enveloping the received coil sections (6).

4. Stator according to one of the claims 1 to 3,
**characterised in that**
the shape-locking members (10) of the yoke (1) and the shape-locking members (12) of the wound poles (2) have a dovetail-like cross-section.

5. Stator according to one of the claims 1 to 4,
**characterised in that**
on the air gap side of the poles (2) and/or the intermediate poles (3), grooves (14) parallel to the axis provide the symmetry of the winding

6. Method for producing the stator of an electrical induction machine, especially a synchronous machine, which comprises a stack of laminations forming an annular yoke and a winding lying on the inner side thereof which consists of a multitude or a plurality of coils distributed in a circumferential direction,
**characterised in that**
radially projecting poles (2) and intermediate poles (3) alternating with each other in the circumferential direction are provided on the inner side of the yoke (1), of which the intermediate poles (3) are produced with the yoke (1) as an integral stack of laminations and the poles (2) as a separate stack of laminations, each pole (2) is wound with a coil (4) and the wound poles (2) are joined to the inner side of the yoke (1) between the intermediate poles (3).

7. Method according to claim 6,
**characterised in that**
the wound poles (2) are joined to the yoke (1) through insertion in an axially parallel direction into the intermediate space between the intermediate poles (3).

## Revendications

1. Stator pour une machine électrique à induction, notamment une machine synchrone, avec un empilage de tôles qui forme une culasse (1) annulaire et est situé sur le côté interne d'un bobinage qui est formé par une, plusieurs ou de nombreuses bobines (4), qui sont réparties dans la direction périphérique, des pôles (2) saillants vers l'intérieur, dans la direction radiale, et des pôles intermédiaires (3) étant disposés alternativement, dans la direction périphérique, les pôles intermédiaires (3) étant dépourvus de bobines et les pôles (2) étant entourés chacun par une bobine (4), ce pourquoi les pôles (2) présentent chacun, sur leurs côtés longitudinaux, parallèles à l'axe, une rainure (5) s'étendant dans la direction du côté longitudinal, pour la réception de sections de bobines (6), et ces rainures (5) présentant une section transversale trapézoïdale,
**caractérisé en ce que**
les pôles intermédiaires (3) dépourvus de bobines ferment les ouvertures de la rainure longitudinale, les pôles intermédiaires (3) étant formés d'une pièce avec la culasse (1), et les pôles (2) étant réalisés sous la forme d'empilages de tôles, séparés, pourvus de bobines, qui possèdent, sur leurs côtés d'assemblage (11) situés vers la culasse (1), des organes d'encliquetage (12) qui s'étendent parallèlement à l'axe, auxquels correspondent des organes d'encliquetage (10) s'étendant parallèlement à l'axe, à distance de la division des pôles (2) pourvus de bobines, sur le côté intérieur de la culasse (1).

2. Stator selon la revendication 1,
**caractérisé en ce que**,
sur les ouvertures des rainures (5), côté frontal, des supports de bobines (8), soutenant les sections de tête (7) de la bobine respective (4), sont prévus aux pôles (2).

3. Stator selon revendication 1 ou 2,
**caractérisé en ce que**
les rainures (5), aux pôles (2) pourvus de bobines, sont revêtues avec un corps de bobine (9) qui gaine les sections de bobines (6) y reçues.

4. Stator selon l'une des revendications 1 à 3,
**caractérisé en ce que**
les organes d'encliquetage (10) de la culasse (1) et les organes d'encliquetage (12) des pôles (2) pourvus de bobines présentent une section transversale en queue d'aronde.

5. Stator selon l'une des revendications 1 à 4,
**caractérisé en ce que**,
sur le côté de l'entrefer des pôles (2) et/ou des pôles intermédiaires (3), sont prévues des rainures (14) parallèles à l'axe qui servent à la symétrie du bobinage.

6. Procédé pour la fabrication du stator pour une machine électrique à induction, notamment pour une machine synchrone, avec un empilage de tôles qui forme une culasse (1) annulaire et est situé sur le côté interne d'un bobinage qui est formé par une, plusieurs ou de nombreuses bobines (4) qui sont réparties dans la direction périphérique
**caractérisé en ce que**
des pôles (2) et des pôles intermédiaires (3) saillants à l'intérieur, dans la direction radiale, alternant dans la direction périphérique, sont prévus sur la culasse (1), les pôles intermédiaires (3) étant fabriqués d'une pièce avec la culasse (1) sous la forme d'un empilage de tôles, et les pôles (2) étant fabriqués sous la forme d'empilage de tôles séparé, chaque pôle (2) étant entouré d'une bobine (4) et les pôles (2) pourvus de bobines étant adjoints à la culasse (1), sur la face intérieure, entre les pôles intermédiaires (3).

7. Procédé selon la revendication 6,
**caractérisé en ce que**,
les pôles (2) pourvus de bobines sont adjoints à la culasse (1), en les insérant parallèlement à l'axe, dans les intervalles entre les pôles intermédiaires (3).
